# EUROPEAN PATENT APPLICATION

(11) **EP 4 287 374 A1**
(43) Date of publication of application: **06.12.2023**
(21) Application number: 22895850.0
(22) Date of filing: 07.10.2022
(51) Int. Cl.: H01M 50/204, H01M 50/249

(54) **BATTERY PACK AND VEHICLE COMPRISING SAME**

(30) Priority: 22.11.2021 KR 20210161760
(71) Applicant: LG Energy Solution, Ltd., Seoul 07335 (KR)
(72) Inventor: KIM, Young-Jin, Daejeon 34122 (KR); SHIN, Yong-Shik, Daejeon 34122 (KR); SON, Do-Wung, Daejeon 34122 (KR); YUN, Seung-Hyun, Daejeon 34122 (KR); JUNG, Byeong-Yoon, Daejeon 34122 (KR); CHOI, Sung-Man, Daejeon 34122 (KR)
(74) Representative: Plasseraud IP
(86) International application number: PCT/KR2022/015148
(87) International publication number: WO 2023/090641

(57) **Abstract**

A battery pack according to an embodiment of the present disclosure includes at least one battery module including at least one battery cell; a case tray configured to support the at least one battery module; a tray cover coupled to the case tray; and at least one bushing gasket configured to connect the case tray and the tray cover and to support the case tray on at least three points.

## Description

### TECHNICAL FIELD

The present disclosure relates to a battery pack and a vehicle including the same.

The present application claims priority to Korean Patent Application No. 10-2021-0161760 filed on November 22, 2021 in the Republic of Korea, the disclosures of which are incorporated herein by reference.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

When a battery pack is configured by connecting a plurality of battery cells in series/parallel, a method of first configuring a battery module including at least one battery cell and adding other elements by using the at least one battery module to configure a battery pack is general.

A conventional battery pack generally includes at least one battery module including at least one battery cell, a case tray supporting the at least one battery module, and a tray cover coupled to the case tray.

On the other hand, in the case of a conventional battery pack, in order to implement a watertight structure, a sealing gasket is assembled with the case tray and the tray cover. In the case of a conventional battery pack, a separate gasket mounting structure such as a flange or a groove for seating the sealing gasket on the case tray or tray cover is additionally made to assemble the sealing gasket.

However, such a conventional separate gasket mounting structure occupies a considerable space or volume in the battery pack structure, increasing the size of the entire battery pack and reducing the energy density of the battery pack.

In addition, in the case of a conventional separate gasket mounting structure, there is also a problem of reducing cost competitiveness by causing an increase in manufacturing cost due to an additional molding process of the case tray or the tray cover for forming such a separate additional structure.

### DISCLOSURE

### Technical Problem

The present disclosure is designed to solve the problems of the related art, and therefore the present disclosure is directed to providing a battery pack capable of increasing energy density and securing sealing performance, and a vehicle including the battery pack.

In addition, another object of the present disclosure is to provide a battery pack capable of securing cost competitiveness and a vehicle including the battery pack.

### Technical Solution

In one aspect of the present disclosure, there is provided a battery pack comprising: at least one battery module including at least one battery cell; a case tray configured to support the at least one battery module; a tray cover coupled to the case tray; and at least one bushing gasket configured to connect the case tray and the tray cover and to support the case tray on at least three points.

The bushing gasket may include: a gasket member configured to support the case tray; a bushing member inserted into the gasket member; a bolting member disposed on one side of the gasket member; and a nut member fastened with the bolting member and configured to pass through the bushing member on the other side of the gasket member.

The gasket member may include: a gasket body provided with a bushing member insert hole into which the bushing member is inserted; and at least one guide pin provided on the gasket body.

The at least one guide pin may be formed to protrude from the other side of the gasket body to a predetermined length.

The guide pin may be provided as a pair, and the pair of guide pins may be disposed with the bushing member insert hole interposed therebetween.

The gasket member may include a gasket bead provided on the gasket body and provided along the circumference of the bushing member insert hole.

The bushing member may include: a bushing body inserted into the bushing member insert hole; and a bushing opening formed in the bushing body configured to allow the nut member to pass therethrough.

The tray cover may be provided with a nut member insert hole through which the nut member passes.

The bushing gasket may be provided in plurality, and the plurality of bushing gaskets may be spaced apart from each other by a predetermined distance.

In another aspect of the present disclosure, there is also provided a vehicle including at least one battery pack according to the above embodiments.

### Advantageous Effects

According to various embodiments as described above, it is possible to provide a battery pack capable of increasing energy density and securing sealing performance, and a vehicle including the battery pack.

In addition, according to various embodiments as described above, it is possible to provide a battery pack capable of securing cost competitiveness and a vehicle including the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery pack according to an embodiment of the present disclosure.
FIG. 2 is an exploded perspective view of a bushing gasket of the battery pack of FIG. 1.
FIG. 3 is a front view of the bushing gasket of FIG. 2.
FIG. 4 is a rear view of the bushing gasket of FIG. 2.
FIGS. 5 to 7 are views for describing the assembly process of the bushing gasket of the battery pack of FIG. 1.
FIG. 8 is a view for describing a vehicle according to an embodiment of the present disclosure.

### BEST MODE

The present disclosure will now be described more fully with reference to the accompanying drawings, in which exemplary embodiments of the present disclosure are shown. These embodiments are provided so that the present disclosure will be thorough and complete, and will fully convey the concept of the present disclosure to one of ordinary skill in the art, and the present disclosure may be embodied in many different forms and should not be construed as being limited to the embodiments set forth herein. In addition, in order to help the understanding of the present disclosure, the accompanying drawings are not drawn to scale, but dimensions of some components may be exaggerated.

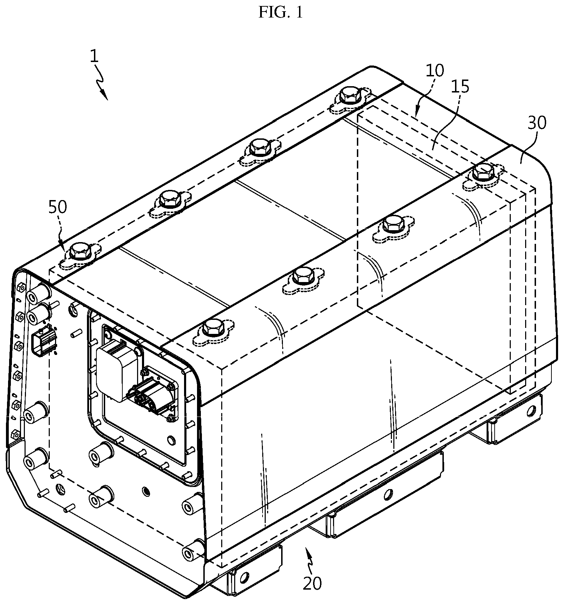

FIG. 1 is a view for describing a battery pack according to an embodiment of the present disclosure.

Referring to FIG. 1, a battery pack 1 may be provided in a vehicle such as an electric vehicle or a hybrid vehicle as an energy source. The battery pack 1 may be mounted on the body of the vehicle, and may be mounted on the lower part of the body of the vehicle.

The battery pack 1 may include a battery module 10, a case tray 20, a tray cover 30, and a bushing gasket 50.

The battery module 10 may be provided in at least one or in plurality. The battery module 10 may include a battery cell 15.

The battery cell 15 may be provided in at least one or in plurality. The battery cell 15 is a secondary battery, and may be provided as a pouch-type secondary battery, a prismatic secondary battery, or a cylindrical secondary battery. Hereinafter, in this embodiment, the battery cell 15 will be described as being provided as a pouch-type secondary battery.

The case tray 20 supports the at least one battery module 10 and may be mounted on a machine or instrument using the battery pack 1 as an energy source. By way of example, the case tray 20 may be mounted on a vehicle such as an electric vehicle.

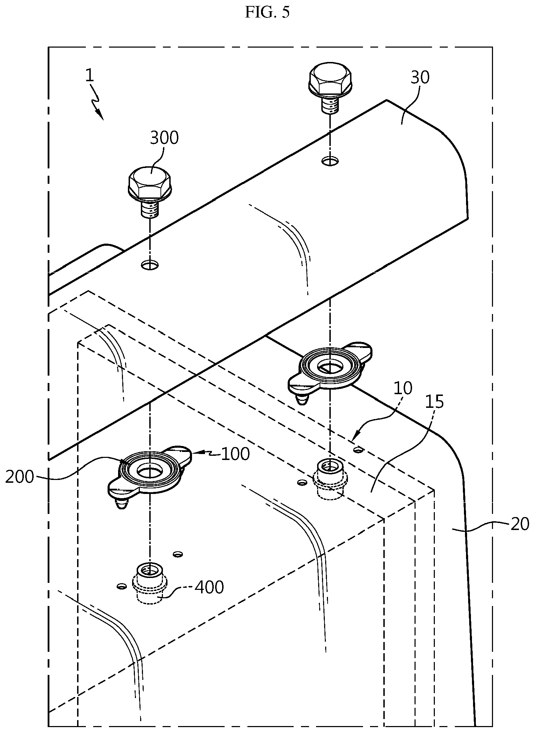

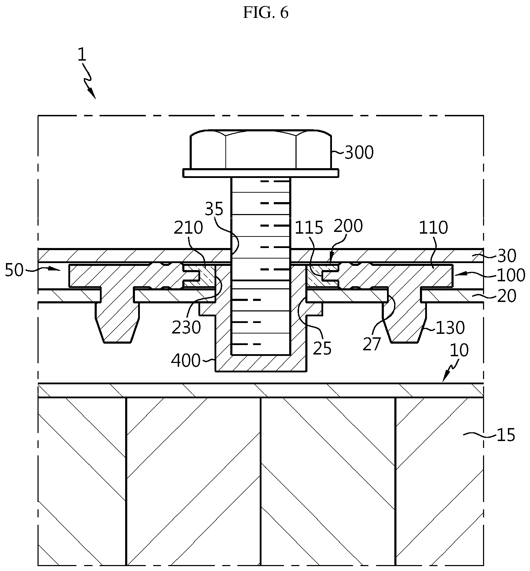

The case tray 20 may include a nut member fastening hole 25 (see FIGS. 5 to 7) and a guide pin insert hole 27 (see FIGS. 5 to 7).

The nut member fastening hole 25 may be provided in at least one or in plurality. A nut member 400 of the bushing gasket 50 described later may pass or be fastened through the nut member fastening hole 25.

The nut member fastening hole 25 may be provided near the edge of the case tray 20. In this regard, the nut member fastening hole 25 may also be formed in other parts other than the vicinity of the edge of the case tray 20 for fastening of the bushing gasket 50 described later.

The guide pin insert hole 27 may be provided in at least one or in plurality so as to face each other with the nut member fastening hole 25 interposed therebetween. A guide pin 130 of the bushing gasket 50 described later may be inserted through the guide pin insert hole 27.

The tray cover 30 is coupled with the case tray 20, and may reinforce the strength of the case tray 20. The tray cover 30 may be mounted on an upper edge of the case tray 20. It is not limited thereto, and the tray cover 30 may also be provided in a shape capable of covering the upper side of the case tray 20 and coupled to the case tray 20, of course.

A nut member fastening hole 35 (see FIGS. 5 to 7) may be provided in the tray cover 30.

The nut member fastening holes 35 may be provided in at least one or in plurality. The nut member 400 of the bushing gasket 50 described later may pass or be fastened through the nut member fastening hole 35.

The nut member fastening hole 35 may be provided near the edge of the tray cover 30. The nut member fastening hole 35 may be formed at a position opposite to the nut member fastening hole 25 of the case tray 20. Meanwhile, the nut member fastening hole 35 may also be formed at other parts other than the vicinity of the edge of the tray cover 30 for fastening of the bushing gasket 50 described later.

The bushing gasket 50 is for implementing a watertight structure, connects the case tray 20 and the tray cover 30, and may support the case tray 20 on at least three points.

The bushing gasket 50 may more stably support the battery module 10 together with the case tray 20 and the tray cover 30 through this three-point support structure.

The bushing gasket 50 may be provided in plurality. The plurality of bushing gaskets 50 may be spaced apart from each other by a predetermined distance when the case tray 20 and the tray cover 30 are connected.

Hereinafter, the bushing gasket 50 according to this embodiment will be looked at in more detail.

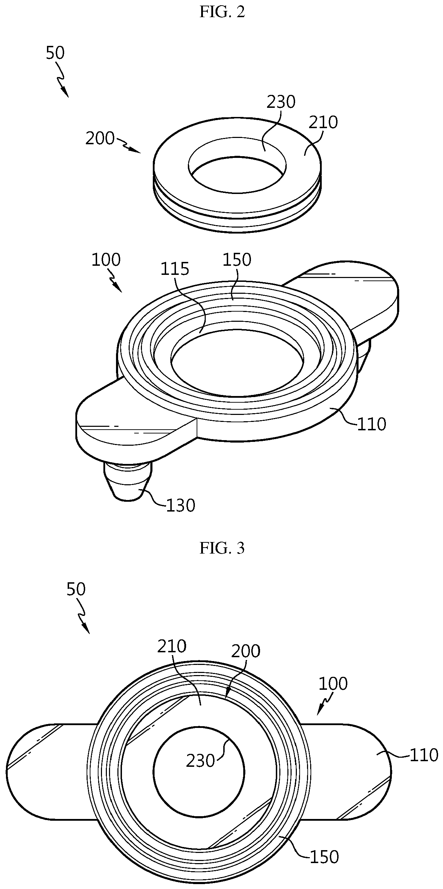

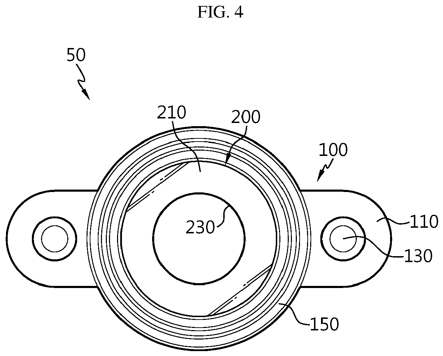

FIG. 2 is an exploded perspective view of a bushing gasket of the battery pack of FIG. 1, FIG. 3 is a front view of the bushing gasket of FIG. 2, and FIG. 4 is a rear view of the bushing gasket of FIG. 2.

Referring to FIGS. 2 to 4, the bushing gasket 50 may include a gasket member 100, a bushing member 200, a bolting member 300 (see FIGS. 5 to 7), and a nut member 400 (see FIGS. 5 to 7).

The gasket member 100 may support the case tray 20.

The gasket member 100 may include a gasket body 110, a guide pin 130, and a gasket bead 150.

The gasket body 110 may include a bushing member insert hole 115 into which the bushing member 200 described later is inserted. The bushing member insert hole 115 may be provided at the center of the gasket body 110.

The guide pin 130 is provided in at least one or in plurality, and may be provided in the gasket body 110. Specifically, the guide pin 130 may be provided as a pair. The pair of guide pins 130 may be disposed to face each other with the bushing member insert hole 115 interposed therebetween.

The pair of guide pins 130 may protrude from the other side of the gasket body 110 to a predetermined length. Here, the pair of guide pins 130 may be integrally formed from the gasket body 110 or separately mounted to the gasket body 110.

The pair of guide pins 130 may form a three-point support structure together with a fastening coupling structure of the bolt member 300 and the nut member 400 described later. Accordingly, in this embodiment, when the bushing gasket 50 is coupled, a three-point support structure is formed, so that the support of the battery module 10 may be guided more stably.

The gasket bead 150 is to further improve the sealing performance of the bushing gasket 50, is provided on the gasket body 110, and may be provided along the circumference of the bushing member insert hole 115.

The gasket bead 150 may be elastically deformed when the bolting member 300 and the nut member 400 described later are coupled, and may be more closely attached to the case tray 20 and the case cover 30. That is, when the bolting member 300 and the nut member 400 described later are combined, the gasket bead 150 is pressurized to form surface pressure on both sides of the case tray 20 and the case cover 30, and may be more closely attached to the case tray 20 and the case cover 30.

The bushing member 200 is for guiding fastening of the bolting member 300 and the nut member 400 described later, and may be inserted into the gasket member 100.

The bushing member 200 may include a bushing body 210 and a bushing opening 230.

The bushing body 210 has a substantially cylindrical ring shape and may be inserted into the bushing member insert hole 115. The bushing body 210 may be made of a metal material. Meanwhile, the bushing body 210 may also be made of an insulating material.

The bushing opening 230 is formed in the center of the bushing body 210 and may allow the nut member 400 described later to pass therethrough. Here, the bushing opening 230 may allow the nut member 400 described later to pass therethrough or to be fastened therethrough.

The bolting member 300 is disposed on one side of the gasket member 100 and may be fastened to the nut member 400 described later. The gasket member 100 may be fixed to the case tray 20 and the case cover 30 through fastening with the bolting member 300 and the nut member 400 described later.

The nut member 400 is fastened to the bolting member 300, and may pass or be fastened through the bushing member 200 at the other side of the gasket member 100. Specifically, the nut member 400 may pass or be fastened through the bushing opening 230 disposed in the gasket body 110 of the gasket member 100.

Hereinafter, the assembly process of the bushing gasket 50 according to this embodiment will be described in more detail.

FIGS. 5 to 7 are views for describing the assembly process of the bushing gasket of the battery pack of FIG. 1.

Referring to FIGS. 5 to 7, during the manufacturing process of the battery pack 1, a worker or the like may seat the battery module 10 in the case tray 20 and then couple the case tray 20 and the tray cover 30. Here, the bushing gasket 50 may implement the watertight structure of the battery pack 1 together, while being disposed between the case tray 20 and the tray cover 30.

Specifically, the worker or the like allow the nut member 400 of the bushing gasket 50 to pass or be fastened through the nut member fastening hole 25 of the case tray 20 and the nut member fastening hole 35 of the tray cover 30.

In addition, the worker or the like may seat the gasket member 100 of the bushing gasket 50 between the case tray 20 and the tray cover 30. Here, the worker or the like may insert the guide pins 130 of the gasket member 100 into the guide pin insert hole 27 of the case tray 20.

Through the insertion of the guide pins 130, positioning of the case tray 20 is guided when the bolting member 300 and the nut member 400 are coupled, and it is possible to prevent position deviation or position misalignment of the case tray 20 or the tray cover 30 that may occur during the coupling.

Then, the worker or the like may fasten the bolting member 300 with the nut member 400 disposed in the bushing opening 230 of the bushing member 200 of the bushing gasket 50. Here, when the bolting member 300 and the nut member 400 are coupled, the bushing body 210 of the bushing member 200 may prevent the bolting member 300 and the nut member 400 from moving, so that it is possible to guide a more stable fastening between the bolting member 300 and the nut member 400.

In this embodiment, through the bushing gasket 50, it is possible to effectively secure the sealing performance of the battery pack 1 by implementing a simpler bolt nut assembly structure without a separate gasket seating structure such as a conventional flange or groove.

Accordingly, in this embodiment, the energy density of the battery pack 1 may be significantly increased while implementing a slimmer structure of the battery pack 1 by omitting an additional gasket seating structure.

In addition, in this embodiment, the assembly process of the battery pack 1 may be simplified and the manufacturing cost of the battery pack 1 may be significantly reduced by omitting an additional gasket seating structure.

Therefore, in this embodiment, the assembly efficiency of the battery pack 1 may be remarkably improved through the bushing gasket 50 while manufacturing cost may be lowered to secure cost competitiveness.

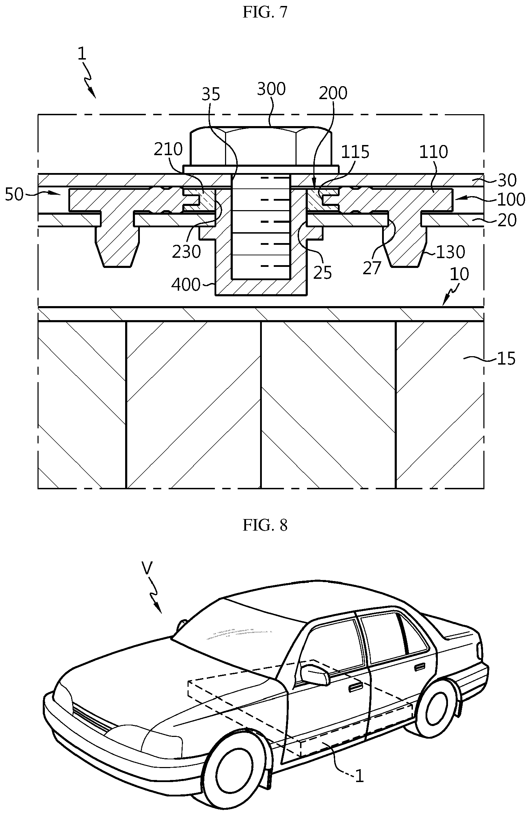

FIG. 8 is a view for describing a vehicle according to an embodiment of the present disclosure.

Referring to FIG. 8, the battery pack 1 may be provided in a vehicle V as a fuel source of the vehicle. By way of example, the battery pack 1 may be provided in electric vehicles, hybrid vehicles, commercial vehicles such as trucks and buses, and any other type of vehicles V capable of using the battery pack 1 as a fuel source.

Also, the battery pack 1 may be provided in other devices, instruments, and facilities, such as an energy storage system using a secondary battery, in addition to the vehicle V.

As such, since the battery pack 1 and devices, instruments, and facilities having the battery pack 1 such as the vehicle V according to this embodiment include the battery module 10 described above, a battery pack 1 having all of the advantages due to the battery module 10 described above, and devices, instruments, and facilities such as a vehicle V having such a battery pack 1 may be implemented.

According to various embodiments as described above, it is possible to provide a battery pack 1 capable of increasing energy density and securing sealing performance, and a vehicle V including the battery pack.

In addition, according to various embodiments as described above, it is possible to provide a battery pack 1 capable of securing cost competitiveness and a vehicle V including the battery pack.

While the preferred embodiments of the present disclosure have been shown and described, the present disclosure is not limited to the specific embodiments described above, various modifications may be made by one of ordinary skill in the art to which the present disclosure pertains without departing from the gist of the present disclosure as defined by the claims, and these modifications should not be individually understood from the technical feature or prospect of the present disclosure.

## Claims

1. A battery pack comprising:
at least one battery module including at least one battery cell;
a case tray configured to support the at least one battery module;
a tray cover coupled to the case tray; and
at least one bushing gasket configured to connect the case tray and the tray cover and to support the case tray on at least three points.

2. The battery pack according to claim 1, wherein the bushing gasket includes:
a gasket member configured to support the case tray;
a bushing member inserted into the gasket member;
a bolting member disposed on one side of the gasket member; and
a nut member fastened with the bolting member and configured to pass through the bushing member on the other side of the gasket member.

3. The battery pack according to claim 2, wherein the gasket member includes:
a gasket body provided with a bushing member insert hole into which the bushing member is inserted; and
at least one guide pin provided on the gasket body.

4. The battery pack according to claim 3, wherein the at least one guide pin is formed to protrude from the other side of the gasket body to a predetermined length.

5. The battery pack according to claim 3, wherein the guide pin is provided as a pair, and
wherein the pair of guide pins are disposed with the bushing member insert hole interposed therebetween.

6. The battery pack according to claim 3, wherein the gasket member includes a gasket bead provided on the gasket body and provided along the circumference of the bushing member insert hole.

7. The battery pack according to claim 2, wherein the bushing member includes:
a bushing body inserted into the bushing member insert hole; and
a bushing opening formed in the bushing body configured to allow the nut member to pass therethrough.

8. The battery pack according to claim 1, wherein the tray cover is provided with a nut member insert hole through which the nut member passes.

9. The battery pack according to claim 1, wherein the bushing gasket is provided in plurality, and
wherein the plurality of bushing gaskets are spaced apart from each other by a predetermined distance.

10. A vehicle comprising at least one battery pack according to claim 1.
